# EUROPÄISCHE PATENTSCHRIFT

(11) **EP 2 024 712 B1**
(45) Veröffentlichungstag und Bekanntmachung des Hinweises auf die Patenterteilung: **18.01.2017**
(21) Anmeldenummer: 07725132.0
(22) Anmeldetag: 11.05.2007
(51) Int. Cl.: G01D 21/02, F04D 15/00

(54) **EINRICHTUNG ZUR MESSWERTÜBERTRAGUNG**
DEVICE FOR TRANSMITTING MEASURED VALUES
DISPOSITIF POUR LA TRANSMISSION DE VALEURS DE MESURE

(30) Priorität: 12.05.2006 DE 102006022740
(43) Veröffentlichungstag der Anmeldung: 18.02.2009
(73) Patentinhaber: KSB Aktiengesellschaft, 67227 Frankenthal (DE)
(72) Erfinder: SILOVIC, Marjan, 67227 Frankenthal (DE); GONTERMANN, Daniel, 67227 Frankenthal (DE); KOLLMAR, Dirk, 68542 Heddesheim (DE); KELLER, Christoph, 67251 Freinsheim (DE)
(86) Internationale Anmeldenummer: PCT/EP2007/004212
(87) Internationale Veröffentlichungsnummer: WO 2007/131729

(56) Entgegenhaltungen:
- EP-A- 0 330 347
- EP-A- 0 905 596
- US-A- 5 839 094

## Beschreibung

Die Erfindung betrifft eine Einrichtung zur Messwertübertragung mit einem aus miniaturisierten Bauelementen bestehenden, an einer Kreiselpumpenanordnung mit Pumpe und Antriebsmotor angeordneten Sensormodul und einer Auswerteeinheit, wobei das Sensormodul Anschlüsse für verschiedene Sensoren aufweist, das Sensormodul mit ein oder mehreren Sensoren, die Betriebszustände der Kreiselpumpenanordnung mit Pumpe und Antriebsmotor als Messwerte erfassen, verbindbar ist und wobei das Sensormodul einen Anschluss zur Energieversorgung aufweist und die Messwerte verarbeitet.

Bei einer Kreiselpumpenanordnung mit Pumpe und Antriebsmotor ist eine Überwachung bekanntermaßen sehr aufwändig und kostenintensiv. Im Wege einer vorbeugenden Instandhaltung sind solche Maschinen mit Sensoren zur Überwachung der Betriebszustände in Form von Temperaturen, Drücken, Durchflussmengen, Schwingungen und dergleichen ausgestattet. Dies bedeutet einen erheblichen Aufwand bei der Messwerterfassung. Die dazu erforderlichen, unterschiedlichen Sensoren müssen jeweils an den entsprechenden Stellen einer Maschine eingebaut werden, einzeln verdrahtet und an verschiedene Auswertegeräte angeschlossen werden.

Die US 5 839 094 A offenbart ein tragbares Datenerfassungsgerät, das zu Ausbildungszwecken, insbesondere im Laborbereich von Schulen, verwendet wird. Das Gerät besitzt verschiedene Eingänge zum Anschluss von verschiedenartigen Sensoren. Die Sensoren werden über ein spezielles Kopplungsmittel an das Gerät angeschlossen. In diesem Kopplungsmittel befindet sich ein Identifikationsmittel, das dem Gerät Informationen zum Sensortyp zur Verfügung stellt. Ein im Kopplungsmittel befindliches Sensor-Speichermittel dient der Speicherung von sensorbezogenen Daten, wie Kalibrierinformationen, Informationen zu Einheit einer Messgröße oder Format-Informationen. An das Gerät sind spezielle Sensoren über ein spezielles Kopplungsmittel anzuschließen. Die Verwendung von kostengünstigen Standardsensoren, die bei einer Kreiselpumpenanordnung eingesetzt werden, ist nicht vorgesehen. Überdies ist das tragbare Laborgerät für den dauerhaften Einsatz an einer Kreiselpumpenanordnung nicht geeignet.

Die EP 0 330 347 A1 offenbart ein Überwachungsmodul zum Überwachen einer Vielzahl von Funktionen und Bedingungen einer Landmaschine, wie eines Traktors. Zur Dateneingabe dient ein Programmiermittel, das einen Speicher mit Daten und Instruktionen versorgt. Bei diesem Überwachungsmodul sind bei einer Inbetriebnahme eine Vielzahl von Daten einzugeben, was das Risiko von Fehlbedienungen birgt. Außerdem dient es nur einer Anzeige von Messwerten an einer Maschine und nicht der Messwertübertragung.

Die EP 0 905 596 A2 betrifft eine Pumpenanordnung zur Druckregelung mit mindestens zwei parallel geschalteten Kreiselpumpen für die mengenvariable Förderung von Flüssigkeiten in Rohrleitungssystemen, wobei ein Sensor zur Erfassung des Förderdruckes der Pumpenanordnung auf deren Druckseite angeordnet ist und ein Mikroprozessorsystem in Abhängigkeit vom Signal des druckseitigen Sensors durch Beeinflussung der Drehzahl von mindestens einer Kreiselpumpe den Förderdruck regelt. Das Mikroprozessorsystem adaptiert eine untere Stellbereichsgrenze in Form der Mindestdrehzahl der Regelpumpe selbsttätig zu diskreten Zeitpunkten beim Aktivieren oder Deaktivieren einer oder mehrerer Kreiselpumpen in Abhängigkeit von einem vorgegebenen Soll- und/oder ermittelten Istwert des Förderdruckes nach einer vorgegebenen Formel.

Aus der EP 0 733 883 B1 ist eine Einrichtung zur Messwertübertragung mit Sensormodul und einem Auswertegerät für eine Verwendung bei Unterwassermotorpumpen und Tauchmotorpumpen bekannt. An ein in eine Maschine integriertes Sensormodul sind mehrere verschiedene Sensoren anschließbar und deren Messwerte verarbeitbar. Die Integration des Sensormoduls in einen elektrischen Antriebsmotor im Bereich des Wickelkopfes bedingt allerdings ein spezielles, abschirmendes sowie druckfestes und flüssigkeitsdichtes Gehäuse. Zur Auswertung der im Sensormodul vorverarbeiteten Messwerte bedarf es eines separaten Auswertegeräts. Dazu ist eine Zuordnung jedes angeschlossenen Sensors nach Art und Messbereich notwendig. Dies erfordert jedoch eine aufwändige manuelle Parametrierung des Auswertegeräts, wobei das Risiko einer Vertauschung der Eigenschaften der speziellen Pumpe und ihrer Anwendung besteht. Dies führt neben dem vorhandenen Fehlerrisiko zu einem aufwändigen Vertriebs- und Abwicklungsprozess, insbesondere wenn das Gerät an eine vorhandene Pumpe beim Kunden nachgerüstet werden soll.

Der Erfindung liegt somit das Problem zu Grunde, eine einfach aufgebaute Einrichtung zur Messwerterfassung, -verarbeitung und -übertragung für Kreiselpumpenanordnungen zu entwickeln, bei der das Risiko von manuellen Fehlbedienungen ausgeschlossen ist.

Die Lösung dieses Problems sieht vor, dass das Sensormodul die Sensoren durch Identifikationsmittel bestimmt, dass das Sensormodul als ein Signaltransmitter mit standardisiertem Ausgangssignal ausgeführt ist, dass die Auswerteeinheit einen Mikrorechner aufweist, in das Sensormodul integriert ist und mit einer Anzeige ausgeführt ist und dass die Auswerteeinheit die Messwerte verarbeitet und auf der Anzeige Messwerte und/oder berechnete Größen anzeigt und dass der Signaltransmitter eine Speichervorrichtung mit technologischen Daten der Pumpe und/oder des Antriebsmotors aufweist, wobei der Mikrorechner mit Hilfe der Messwerte und der gespeicherten Daten Betriebsdaten und Betriebszustände der Kreiselpumpenanordnung berechnet und auswertet.

Dadurch ist eine kompakte Einrichtung zur Messwertübertragung geschaffen, die vollkommen auf Bedieneingaben verzichtet. Die Art und die Messbereiche der Sensoren liefert das Identifikationsmittel an den Signaltransmitter. Eine Inbetriebnahme besteht alleine im Anschließen der Sensoren, wodurch ein Parametrieren des Signaltransmitters nicht mehr erforderlich ist.

Nach der Erfindung sind auch im Signaltransmitter und/oder in dessen Auswerteeinheit angeordnete Identifikationsmittel vorgesehen. Dazu können in einer im Signaltransmitter befindlichen Speichervorrichtung geeignete Daten, wie beispielsweise Sensordaten, oder dergleichen, gespeichert sein.

Durch die integrierte Auswerteeinheit mit Mikrorechner und Anzeige erfolgt eine fehlerfreie Signalverarbeitung und eine Darstellung von Messwerten und berechneten Größen. Die Darstellung von Messwerten und/oder berechneten Größen kann zyklisch alternierend erfolgen. Alternativ ist eine permanente Anzeige von Messwerten und/oder berechneten Größen vorgesehen. Zusätzlich kann die Anzeige Mittel zur Darstellung von Alarmen und Warnungen besitzen. Irgendwelche Mittel zur Ausführung von händischen Bedienfunktionen am Signaltransmitter sind nicht mehr erforderlich.

Dadurch, dass das Sensormodul eine Speichervorrichtung mit technologischen Daten der Pumpe und/oder des Antriebsmotors aufweist, wobei der Mikrorechner mit Hilfe der Messwerte und den gespeicherten Daten Betriebsdaten und Betriebszustände der Kreiselpumpenanordnung berechnet und auswertet, ergibt sich der weitere Vorteil, dass die Anzahl von erforderlichen Sensoren auf ein Minimum reduziert wird, da in der Speichervorrichtung technologische Daten der Pumpe und/oder des Antriebsmotors gespeichert sind. Dadurch können in Kombination mit den gemessenen Werten weitere Kenngrößen der Kreiselpumpenanordnung berechnet werden.

Es ist ebenfalls vorgesehen, dass die mit dem Sensormodul verbundenen Sensoren nach Sensortyp und Messbereich durch in der Speichervorrichtung gespeicherte Daten identifizierbar sind. So ist ein Sensor beispielsweise aus einem Vergleich von dessen Messwert mit gespeicherten technologischen Daten der Pumpe bestimmt.

Eine vorteilhafte Ausgestaltung sieht vor, dass das standardisierte Ausgangssignal ein 4 bis 20 mA Stromschleifensignal ist und den Signaltransmitter mit Energie versorgt, wodurch ein besonders kompakter Aufbau erzielt und der Verdrahtungsaufwand reduziert wird. Über das Stromsignal wird ein Messwert störungssicher übertragen.

Mit der Ausgestaltung, dass die mit dem Signaltransmitter verbundenen Sensoren als Drucksensoren für Saugdruck und/oder Enddruck, als ein Sensor für einen Pumpendifferenzdruck und/oder als Sensoren zur Erfassung weiterer Messgrößen ausgebildet sind, kann beispielsweise bei einer Pumpe durch die Messung von Drücken auf deren Saug- und Druckseite der Betriebspunkt bestimmt, archiviert und angezeigt werden. Dieser Betriebspunkt ist beispielsweise über mehrere LEDs an der Anzeige der integrierten Auswerteeinheit anzeigbar. Ebenfalls ist vorgesehen, einen weiteren Sensor, wie beispielsweise einen Schwingungsaufnehmer, anzuschließen. Dessen Messwerte sind in der Anzeige ebenfalls anzeigbar.

Nach einer anderen Ausgestaltung sind die Sensoren durch eigene Identifikationssignale vom Signaltransmitter identifizierbar. Sensortyp und Messbereich werden so nach Anschluss der Sensoren von diesen an den Signaltransmitter übermittelt. Alternativ sind die angeschlossenen Sensoren über kodierte Steckverbindungen mit dem Signaltransmitter verbunden. Es können auch ein oder mehrer Sensoren über einen Busanschluss mit dem Signaltransmitter verbunden sein.

Nach einer weiteren Ausgestaltung sind in der Speichervorrichtung Typenschilddaten der Pumpe, Typenschilddaten des Antriebsmotors, hydraulische Kennlinien sowie Regel- und/oder Diagnosealgorithmen gespeichert. Die Speichervorrichtung enthält beispielsweise charakteristische Punkte und/oder Stützpunkte von Kennlinien, wie der als Q-H-Kennlinie benannten Förderhöhenkennlinie und/oder der der als Q-P-Kennlinie benannten Leistungskennlinie und/oder der NPSH-Kennlinie der Pumpe. Die technologischen Daten beinhalten somit Werte, aus denen mit Hilfe der Messwerte weitere Kenngrößen der Kreiselpumpenanordnung, wie etwa der Betriebspunkt der Pumpe, berechnet werden können.

Nach einer zusätzlichen Ausgestaltung besitzt der Signaltransmitter eine Speichervorrichtung für die während eines Betriebs der Kreiselpumpenanordnung ermittelten Betriebsdaten und Betriebszustände. Dadurch können die berechneten Werte in der Speichervorrichtung gespeichert werden und stehen somit für eine unmittelbare oder spätere Auswertung oder Anzeige zu Verfügung.

Kundennutzen ergibt sich insbesondere dadurch, dass die Speichervorrichtung zur Speicherung von Laufzeitwerten, Anzahlen von Kreiselpumpenstarts sowie von Lastkollektivwerten für vorgegebene unterschiedliche Zeiträume ausgelegt ist. So lässt das aus den, über den Betriebszeitraum der Pumpe archivierten, Betriebspunkten abgeleitete Lastkollektiv Rückschlüsse auf den Zustand der Pumpe zu.

Vorteilhaft besitzt der Signaltransmitter einen zusätzlichen Ausgang für gespeicherte Daten der Kreiselpumpenanordnung. Technologische Daten der Pumpe und/oder des Antriebsmotors, Betriebsdaten und Betriebszustände sind somit auslesbar. Ein besonders kompakter Aufbau wird erzielt, indem ein Sensoranschluss auch als ein Ausgang der Speichervorrichtung ausgebildet ist. So kann beispielsweise zu Servicezwecken an den Signaltransmitter ein Adapterkabel anstelle eines saugseitigen Drucksensors angeschlossen werden und mit einem Digitalrechner, einem Laptop oder einem Pocket-PC verbunden werden. Damit sind sowohl die gespeicherten, technologische Daten der Pumpe als auch die berechneten Betriebsdaten und Betriebszustände der Kreiselpumpenanordnung auslesbar und bewertbar.

In weiterführenden Ausgestaltungen verfügt der Signaltransmitter über einen Anschluss zur Verbindung mit externen Geräten und/oder erfolgt die Verbindung mit externen Geräten leitungsgebunden, leitungsungebunden oder manuell mit einem mobilen Übertragungselement. Die Übertragung der technologischen Daten kann mittels leitungs- oder nicht leitungsgebundener Punkt-zu-Punkt-Verbindung oder einer Bustopologie erfolgen. Eine besonders flexible Lösung stellt die Übertragung mittels eines mobilen Übertragungselements dar. Der Signaltransmitter und/oder das Übertragungselement können zu diesem Zweck eine Übertragungsschnittstelle, vorteilhafterweise eine USB-Schnittstelle aufweisen. Bei einer leitungsgebundenen Verbindung kann zweckmäßigerweise der Ausgang für das standardisierte Ausgangssignal zur Anbindung externer Geräte mittels Datenbus verwendet sein.

Besondere Bedeutung erlangen vorstehende Ausgestaltungen, wenn die externen Geräte Antriebs-, Steuer-, Regel-, Überwachungs- und/oder Diagnosegeräte sind, die bei der Automation von Pumpen auf eine Vielzahl von technologischen Daten der jeweiligen Pumpe zurückgreifen, um auf die jeweilige Pumpe abgestimmte, optimale Antriebs-, Steuer-, Regel-, Überwachungs- oder Diagnosealgorithmen anwenden zu können.

Vorteilhafterweise stehen die gespeicherten Daten der Kreiselpumpenanordnung den externen Geräten zu deren automatischen Parametrierung, zur Anzeige und/oder zur Weiterverarbeitung zur Verfügung. Dadurch sind alle technologischen Daten der Kreiselpumpenanordnung vor Ort verfügbar und können für eine automatische Parametrierung von Automatisierungsgeräten jeglicher Art wie Leistungselektronikgeräte, Schaltgeräte, Überwachungsgeräte, Diagnosegeräte, Steuer- und Regelgeräte verwendet werden. Mit diesen technologischen Daten ermitteln externe Geräte für ihren Betrieb die erforderlichen Schalt-, Regel-, Überwachungs- oder Diagnosevorgänge. Diese technologischen Daten bilden zusätzlich eine Grundlage für in Schalt-, Regel,- Antriebs-, Überwachungs- oder Diagnosegeräten hinterlegten Algorithmen zum drehzahlgeregelten Betrieb und/oder einer Diagnose der Kreiselpumpenanordnung. Aufwändige und fehleranfällige Handeingabe von technologischen Daten der Pumpe- und/oder des Antriebsmotors entfallen durch die vorgeschlagene Ausgestaltung. Bei mehreren externen Geräten sind keine Mehrfacheingaben mehr erforderlich.

Die Übertragung der technologischen Daten vom Signaltransmitter auf ein externes Gerät erfolgt zum Zeitpunkt der Inbetriebnahme. Dadurch wird der Umstand beseitigt, bereits während der Fertigung eine genaue Zuordnung von externem Gerät zur zugehörigen Kreiselpumpenanordnung durchführen zu müssen. Eine automatisierte Übertragung wird einfach durch Herstellung einer Verbindung mit dem Signaltransmitter, bei Bedarf auch durch Reset, durch Auslöseschalter der Schalt-, Regel-, Antriebs-, Überwachungs- oder Diagnosegeräte oder des mobilen Übertragungselements aktiviert. Die Inbetriebnahme wird bei Verwendung eines mobilen Übertragungselements stark vereinfacht, da gerade bei räumlich weit auseinanderliegenden Komponenten ein aufwändiges Herstellen von Verbindungen entfällt. Ein Inbetriebnehmer kann die technologischen Daten der Kreiselpumpenanordnung in das Übertragungselement einlesen und auf andere Komponenten übertragen.

Ein weiterer Vorteil dieser Ausgestaltung ist die flexible Erweiterbarkeit einer mit einem Signaltransmitter ausgestatteten Kreiselpumpenanordnung. Bei Nachrüstung von externen Geräten, wie beispielsweise Automatisierungsgeräten, zu einer bereits installierten Kreiselpumpenanordnung werden die technologischen Daten, die das externe Gerät benötigt, aus der Speichervorrichtung des Signaltransmitters ausgelesen und an das externe Gerät übertragen. Dadurch wird ein Nachrüsten eines externen Gerätes an eine vorhandene Pumpe gravierend vereinfacht. Entsprechendes gilt beim Austausch von Komponenten, beispielsweise aufgrund von Wartungsarbeiten.

Ein vorteilhaftes Verfahren zur Messwertübertragung an einer Kreiselpumpenanordnung unter Verwendung eines erfindungsgemäßen Signaltransmitters sieht vor, dass die Sensoren durch Identifikationsmittel identifiziert werden und die Auswerteeinheit die Messwerte der jeweiligen Sensoren automatisch verarbeitet und auf der Anzeige Messwerte und/oder berechnete Größen anzeigt. Die Anzeige von Messwerten und/oder berechneten Größen kann zyklisch alternierend erfolgen.

Erfindungsgemäß wird vorgeschlagen, dass der Mikrorechner mit Hilfe der Messwerte und den gespeicherten Daten der Pumpe und/oder des Antriebsmotors Betriebsdaten und Betriebszustände der Kreiselpumpenanordnung berechnet, auswertet und speichert.

Infolge der Identifikationsmittel, beispielsweise ein Identifikationssignal oder kodierte Steckverbindungen, liefern die angeschlossenen Sensoren ein eindeutig zuordenbares Signal an den Signaltransmitter. Eine Identifikation eines Sensors kann auch mit Hilfe von in der Speichervorrichtung gespeicherten Daten erfolgen.

Bei Anwendungen, für die eine weiterführende Zustandsanalyse der Kreiselpumpenanordnung erforderlich ist, hat sich ein Verfahren bewährt, wonach Laufzeitwerte, Anzahlen von Kreiselpumpenstarts und/oder Lastkollektivwerte über vorgegebene unterschiedliche Zeiträume ermittelt und gespeichert werden.

Für Servicezwecke können über einen Ausgang gespeicherte Daten, wie technologische Daten der Pumpe und/oder des Antriebsmotors, Betriebsdaten und Betriebszustände, ausgelesen werden.

Zur flexiblen Anbindung eines erfindungsgemäßen Signaltransmitters an externe Geräte ist es von Vorteil, dass ein Datenaustausch mit externen Geräten leitungsgebunden, leitungsungebunden oder manuell mit einem mobilen Übertragungselement erfolgt.

Vorzugsweise haben die externen Geräte Zugriff auf die gespeicherten Daten der Kreiselpumpenanordnung, werden mit diesen Daten automatisch parametriert und/oder nutzen diese Daten zur Anzeige oder Weiterverarbeitung. Durch einfache Herstellung einer Verbindung mit dem Signaltransmitter, durch Reset oder durch Auslöseschalter wird eine automatisierte Datenübertragung aktiviert.

Ausführungsbeispiele der Erfindung sind in den Zeichnungen dargestellt und werden im folgenden näher beschrieben. Es zeigen die
- Fig. 1: ein Blockschaltbild einer erfindungsgemäßen Einrichtung zur Messwertübertragung und die
- Fig. 2: eine Kreiselpumpenanordnung mit angebautem Signaltransmitter und zusätzlichem externen Gerät.

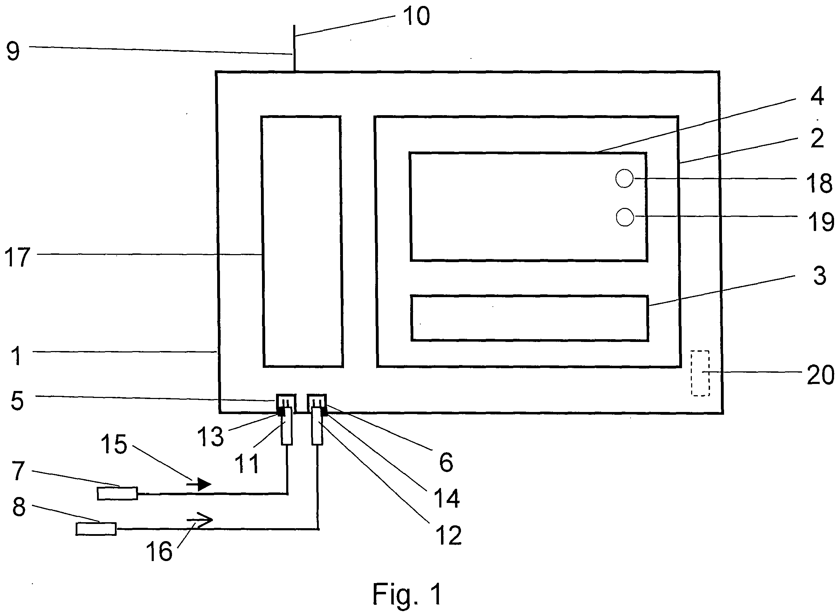

Fig. 1 zeigt ein Blockschaltbild einer erfindungsgemäßen Einrichtung zur Messwertübertragung mit einem Signaltransmitter 1 und einer integrierten Auswerteeinheit 2. Die Auswerteeinheit 2 weist einen Mikrorechner 3 und eine Anzeige 4 zur Darstellung von Messwerten und berechneten Größen auf. Der Signaltransmitter 1 besitzt zwei Anschlüsse 5, 6 zum Anschließen von Sensoren 7, 8, die an einer hier nicht dargestellten Kreiselpumpenanordnung mit Pumpe und Antriebsmotor angeordnet sind. Die Sensoren 7, 8 können Sensoren für Saugdruck und Enddruck einer Pumpe sein. Alternativ kann ein Sensor für den Pumpendifferenzdruck Verwendung finden. Es kann sich um an der Kreiselpumpenanordnung angebrachte Standardsensoren, um pumpen- oder motorintegrierte Sensoren oder um externe Sensoren handeln, welche mit einer Anlage verbunden sind. Der Signaltransmitter 1 ist mit einer Energieversorgung 9 verbunden. Mit einem 4 bis 20 mA Stromschleifensignal wird über den Energieversorgungsanschluss 9 gleichzeitig ein standardisiertes Ausgangssignal 10 des Signaltransmitters 1 ausgegeben. Die angeschlossenen Sensoren 7, 8 sind hier über Identifikationsmittel in Form von kodierten Steckverbindungen 11, 12 mit dem Signaltransmitter 1 verbunden. Die Identifikationsmittel 13, 14 sind in der Fig. 1 als eine unterschiedliche Steckerform symbolisch dargestellt. Eine kodierte Steckerform gewährleistet durch ihre äußere Form und/oder die Ausbildung ihrer Steckelemente eine unverwechselbare Verbindung eines einzelnen Sensors mit den Anschlüssen am Signaltransmitter 1. Vertauschungen der Sensoranschlüsse können damit ausgeschlossen werden. Entsprechend einer definierten Belegung einzelner Steckelemente eines Steckers mit einer Vielzahl von Steckelementen wird auch bei einem Einheitsstecker eine definierte Zuordnung von Sensor und Sensormessbereich gegenüber dem Signaltransmitter erreicht. Bei Sensoren 7, 8, die mit integrierten Kennungen versehen sind, werden elektronische Identifikationsmittel 15, 16 als Identifikationssignale an den Signaltransmitter 1 übermittelt. Mit Hilfe der Identifikationsmittel 13 bis 16 erhält der Signaltransmitter 1 somit Kenntnis über Art und Messbereich der angeschlossenen Sensoren 7, 8. Der Signaltransmitter 1 benötigt dadurch keinerlei Bedienelemente und wird durch einfaches Anschließen der Verbindungen betriebsbereit. Als alternative Identifikationsmittel sind nach der Erfindung innerhalb des Signaltransmitters, beispielsweise in der Auswerteeinheit, angeordnete Identifikationsmittel vorgesehen, die mittels im Signaltransmitter gespeicherter Daten eine definierte Zuordnung von Sensor und Sensormessbereich durchführen.

In einer Speichervorrichtung 17 des Signaltransmitters 1 sind technologische Daten der Pumpe und/oder des Antriebsmotors gespeichert. Mit Hilfe der Messwerte der Sensoren 7, 8 und den in der Speichervorrichtung 17 gespeicherten Daten, berechnet der Mikrorechner 3 Betriebsdaten und Betriebszustände der Kreiselpumpenanordnung. Die Speichervorrichtung 17 dient hier zusätzlich zur Speicherung von während eines Betriebs der Kreiselpumpenanordnung ermittelten Betriebsdaten und Betriebszuständen. Messwerte und/oder berechnete Größen werden in der Anzeige 4 zyklisch alternierend angezeigt. Um den Gerätezustand des Signaltransmitters 1 und den Zustand einer Kreiselpumpenanordnung nach Gutzustand, Warnung, Alarm anzuzeigen, sind an der Anzeige zusätzlich zwei mehrfarbige LEDs 18, 19 angeordnet. Solche Zustände können durch Farbwechsel nach Art einer Ampelanzeige signalisiert werden. Weitere Anzeigen, beispielsweise eine Anzeige von Sensorstörungen oder eine kennlinienartigen Betriebspunktdarstellung, sind im Display oder mit anderen Signalelementen ebenfalls realisierbar. Alternativ ist eine permanente Anzeige von Messwerten und/oder berechneten Größen vorgesehen.

Über das analoge Ausgangssignal 10 sind Messwerte einzelner Sensoren der Kreiselpumpenanordnung an externe Geräte störungssicher übertragbar. Gespeicherte Daten der Pumpe und/oder des Antriebsmotors und/oder Betriebsdaten und Betriebszustände sind über den Sensoranschluss 5 aus dem Signaltransmitter auslesbar. Anstatt eines Sensors 7 wird ein Adapterkabel angeschlossen und damit vom Signaltransmitter 1 eine Verbindung mit einem Digitalrechner, Laptop oder Pocket-PC hergestellt. Zu Servicezwecken können so u. a. Typenschilddaten der Pumpe, Typenschilddaten des Motors, Förderhöhenkennlinie, Leistungskennlinie, NPSH-Kennlinie, Laufzeit der Anordnung in verschiedenen Zeiträumen, Anzahl der Starts in verschiedenen Zeiträumen und ein Lastkollektiv als Histogramm der Betriebspunkte über verschiedene Zeiträume ausgelesen werden. Damit ist am Einbauort ein bestimmungsgemäßer Betrieb einer Pumpe beurteilbar. Weiterhin stehen diese Daten für eine Untersuchung der Wirtschaftlichkeit einer Nachrüstung der Kreiselpumpenanordnung mit Automatisierungsgeräten zur Verfügung.

Im Ausführungsbeispiel ist der Signaltransmitter 1 darüber hinaus mit einer weiteren Übertragungsschnittstelle 20 zur Kommunikation mit einem Digitalrechner oder einem mobilen Übertragungselement, beispielsweise einem USB-Stick, ausgestattet.

In der Darstellung sind exemplarisch zwei Sensoren 7, 8 an den Signaltransmitter 1 angeschlossen. Optional können über weitere Anschlüsse auch weitere Sensoren wie Temperaturaufnehmer, Schwingungsaufnehmer oder Sensoren für Dichtungsleckagen angeschlossen werden. Die Messwerte solcher zusätzlichen Sensoren werden dann ebenfalls in der Anzeige 4 des Signaltransmitters 1 dargestellt.

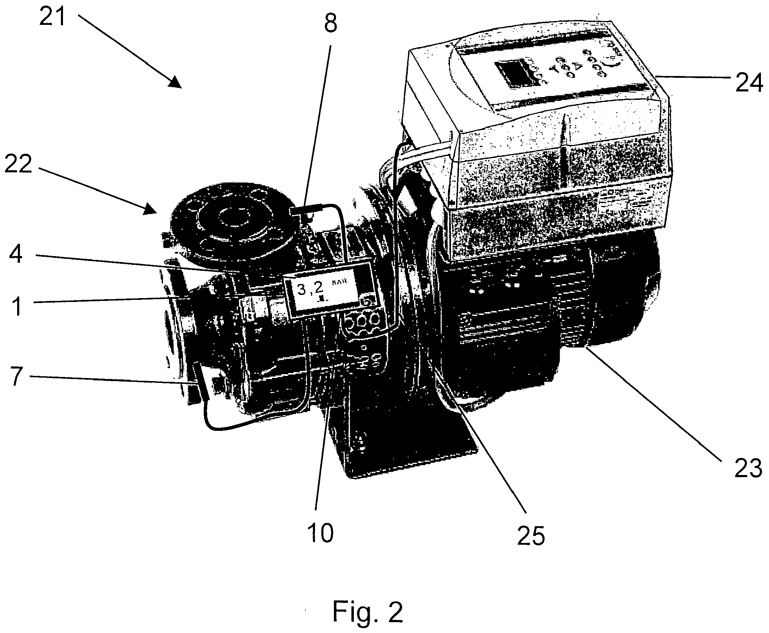

Fig. 2 zeigt eine Kreiselpumpenanordnung 21 mit Pumpe 22 und Antriebsmotor 23. An die Pumpe 22 ist ein Signaltransmitter 1 angebaut und mit den Sensoren für Saugdruck 7 und Enddruck 8 verbunden. Der Signaltransmitter 1 ist intern mit der Speichervorrichtung 17 ausgestattet, in der pumpenspezifische Daten wie Nenndrehzahl der Pumpe, deren minimale und maximale Fördermenge und deren zulässige Lagertemperatur gespeichert sind. Weiterhin sind die Q-H-Kennlinie und die Q-P-Kennlinie der Pumpe in der Speichervorrichtung hinterlegt. Der Signaltransmitter 1 besitzt eine Anzeige 4 zur Darstellung von Piktogramm, Wert und Einheit von Messgrößen wie Saugdruck, Endruck, berechneten Größen, wie Förderhöhe und unter Zuhilfenahme der gespeicherten Förderhöhenkennlinie geschätzter Betriebspunkt der Pumpe, sowie zur Anzeige von Warnungen und Alarmen.

Bei der hier gezeigten Ausgestaltung ist das Ausgangssignal 10 ein Datenbussignal und wird mittels Datenbusverbindung 25 an ein zusätzliches externes Gerät 24 - hier einen Frequenzumrichter - übermittelt. Die Energieversorgung des Signaltransmitters 1 und der Sensoren 7, 8 erfolgt über das Automatisierungsgerät 24. Durch die Datenbusverbindung 25 sind die Messwerte aller am Signaltransmitter 1 angeschlossenen Sensoren an das Automatisierungsgerät 24 übertragbar, anzeigbar und als Regel- oder Diagnosegrößen weiter verarbeitbar und/oder zur Übertragung auf einen Feldbus nutzbar. Außerdem können alle gespeicherten, technologischen Daten der Pumpe 22 und/oder des Antriebsmotors 23, also alle pumpen- und/oder motorspezifischen Kenngrößen wie hydraulische Kennlinien, zulässige Lagertemperatur oder Regel- und/oder Diagnosealgorithmen vom Automatisierungsgerät 24 aus der - hier nicht dargestellten - Speichervorrichtung 17 des Signaltransmitters 1 ausgelesen werden. Dies ermöglicht eine automatische Parametrierung des Automatisierungsgeräts 24 durch den Signaltransmitter 1.

## Patentansprüche

1. Einrichtung zur Messwertübertragung mit einem aus miniaturisierten Bauelementen bestehenden, an einer Kreiselpumpenanordnung mit Pumpe und Antriebsmotor angeordneten Sensormodul und einer Auswerteeinheit, wobei das Sensormodul Anschlüsse für verschiedene Sensoren aufweist, das Sensormodul mit ein oder mehreren Sensoren, die Betriebszustände der Kreiselpumpenanordnung mit Pumpe und Antriebsmotor als Messwerte erfassen, verbindbar ist und wobei das Sensormodul einen Anschluss zur Energieversorgung aufweist und die Messwerte verarbeitet, **dadurch gekennzeichnet, dass** das Sensormodul die Sensoren (7, 8) durch Identifikationsmittel bestimmt, dass das Sensormodul als ein Signaltransmitter (1) mit standardisiertem Ausgangssignal (10) ausgeführt ist, dass die Auswerteeinheit (2) einen Mikrorechner (3) aufweist, in das Sensormodul integriert ist und mit einer Anzeige (4) ausgeführt ist und dass die Auswerteeinheit (2) die Messwerte verarbeitet und auf der Anzeige (4) Messwerte und/oder berechnete Größen anzeigt und dass der Signaltransmitter (1) eine Speichervorrichtung (17) mit technologischen Daten der Pumpe (22) und/oder des Antriebsmotors (23) aufweist, wobei der Mikrorechner (3) mit Hilfe der Messwerte und der gespeicherten Daten Betriebsdaten und Betriebszustände der Kreiselpumpenanordnung (21) berechnet und auswertet.

2. Einrichtung zur Messwertübertragung nach Anspruch 1, **dadurch gekennzeichnet, dass** die Auswerteeinheit (2) auf der Anzeige (4) Messwerte und/oder berechnete Größen zyklisch alternierend anzeigt.

3. Einrichtung zur Messwertübertragung nach Anspruch 1 oder 2, **dadurch gekennzeichnet, dass** der Signaltransmitter (1) Anschlüsse (5, 6) für Sensoren (7, 8) für Saugdruck und/oder Enddruck, für einen Pumpendifferenzdrucksensor und/oder für Sensoren zur Erfassung weiterer Meßgrößen aufweist.

4. Einrichtung zur Messwertübertragung nach Anspruch 1, 2 oder 3, **dadurch gekennzeichnet, dass** die Sensoren (7, 8) durch eigene Identifikationssignale (15, 16) und/oder kodierte Steckverbindungen vom Signaltransmitter (1) identifizierbar sind und/oder dass im Signaltransmitter (1) angeordnete Identifikationsmittel vorgesehen sind.

5. Einrichtung zur Messwertübertragung nach einem der Ansprüche 1 bis 4, **dadurch gekennzeichnet, dass** in der Speichervorrichtung (17) Typenschilddaten der Pumpe (22), Typenschilddaten des Antriebsmotors (23), hydraulische Kennlinien sowie Regel- und/oder Diagnosealgorithmen gespeichert sind.

6. Einrichtung zur Messwertübertragung nach einem der Ansprüche 1 bis 5, **gekennzeichnet durch** eine Speichervorrichtung (17) für die während eines Betriebs der Kreiselpumpenanordnung (21) ermittelten Betriebsdaten und Betriebszustände.

7. Einrichtung zur Messwertübertragung nach Anspruch 6, **dadurch gekennzeichnet, dass** die Speichervorrichtung (17) zur Speicherung von Laufzeitwerten, Anzahlen von Kreiselpumpenstarts sowie von Lastkollektivwerten für vorgegebene unterschiedliche Zeiträume ausgelegt ist.

8. Einrichtung zur Messwertübertragung nach einem der Ansprüche 1 bis 7, **gekennzeichnet durch** einen zusätzlichen Ausgang für gespeicherte Daten der Kreiselpumpenanordnung.

9. Einrichtung zur Messwertübertragung nach einem der Ansprüche 1 bis 8, **gekennzeichnet durch** einen Anschluss zur Verbindung mit externen Geräten (24).

10. Einrichtung zur Messwertübertragung nach Anspruch 9, **dadurch gekennzeichnet, dass** der Ausgang für das standardisierte Ausgangssignal (10) zur Anbindung externer Geräte (24) mittels Datenbus (25) verwendet ist.

11. Einrichtung zur Messwertübertragung nach Anspruch 9 oder 10, **dadurch gekennzeichnet, dass** die gespeicherten Daten der Kreiselpumpenanordnung den externen Geräten (24) zu deren automatischen Parametrierung, zur Anzeige und/oder zur Weiterverarbeitung zur Verfügung stehen.

12. Verfahren zur Messwertübertragung einer Kreiselpumpenanordnung unter Verwendung einer Einrichtung zur Messwertübertragung nach einem der Ansprüche 1 bis 11, **dadurch gekennzeichnet, dass** die Sensoren (7, 8) durch Identifikationsmittel (13, 14, 15, 16) identifiziert werden, dass die Auswerteeinheit (2) die Messwerte der jeweiligen Sensoren (7, 8) automatisch verarbeitet und auf der Anzeige (4) Messwerte und/oder berechnete Größen anzeigt und dass der Mikrorechner (3) mit Hilfe der Messwerte und der gespeicherten Daten der Pumpe (22) und/oder des Antriebsmotors (23) Betriebsdaten und Betriebszustände der Kreiselpumpenanordnung (21) berechnet, auswertet und speichert.

13. Verfahren nach Anspruch 12, **dadurch gekennzeichnet, dass** die Anzeige (4) Messwerte und/oder berechnete Größen zyklisch alternierend anzeigt.

14. Verfahren nach Anspruch 12 oder 13, **dadurch gekennzeichnet, dass** Laufzeitwerte, Anzahlen von Kreiselpumpenstarts und/oder Lastkollektivwerte über vorgegebene unterschiedliche Zeiträume ermittelt und gespeichert werden.

15. Verfahren nach einem der Ansprüche 12 bis 14, **dadurch gekennzeichnet, dass** über einen Ausgang gespeicherte Daten ausgelesen werden.

16. Verfahren nach einem der Ansprüche 12 bis 15, **dadurch gekennzeichnet, dass** ein Datenaustausch mit externen Geräten (24) leitungsgebunden, leitungsungebunden oder manuell mit einem mobilen Übertragungselement erfolgt.

17. Verfahren nach einem der Ansprüche 12 bis 16, **dadurch gekennzeichnet, dass** die externen Geräte (24) Zugriff auf die gespeicherten Daten der Kreiselpumpenanordnung haben, mit diesen Daten automatisch parametriert werden und/oder diese Daten zur Anzeige oder Weiterverarbeitung nutzen.

18. Verfahren nach einem der Ansprüche 12 bis 17, **dadurch gekennzeichnet, dass** durch Herstellung einer Verbindung mit der Einrichtung zur Messwertübertragung (1), durch Reset oder durch Auslöseschalter eine automatisierte Datenübertragung aktiviert wird.

## Claims

1. Device for transmitting measured values, having a sensor module, which comprises miniaturized components and is arranged on a centrifugal pump arrangement with a pump and a drive motor, and an evaluation unit, the sensor module having connections for different sensors, the sensor module being connectable to one or more sensors which detect operating states of the centrifugal pump arrangement with a pump and a drive motor as measured values, and the sensor module having a connection for the power supply and processing the measured values, **characterized in that** the sensor module determines the sensors (7, 8) by identification means, **in that** the sensor module is in the form of a signal transmitter (1) with a standardized output signal (10), **in that** the evaluation unit (2) has a microcomputer (3), is integrated into the sensor module and is designed with a display (4), and **in that** the evaluation unit (2) processes the measured values and displays measured values and/or calculated variables on the display (4), and **in that** the signal transmitter (1) has a memory apparatus (17) containing technological data for the pump (22) and/or the drive motor (23), the microcomputer (3) calculating and evaluating operating data and operating states of the centrifugal pump arrangement (21) with the aid of the measured values and the stored data.

2. Device for transmitting measured values according to Claim 1, **characterized in that** the evaluation unit (2) displays measured values and/or calculated variables on the display (4) in a cyclically alternating manner.

3. Device for transmitting measured values according to Claim 1 or 2, **characterized in that** the signal transmitter (1) has connections (5, 6) for sensors (7, 8) for intake pressure and/or final pressure, for a pump differential pressure sensor and/or for sensors for detecting further measurement variables.

4. Device for transmitting measured values according to Claim 1, 2 or 3, **characterized in that** the sensors (7, 8) can be identified by the signal transmitter (1) by their own identification signals (15, 16) and/or coded plug-in connections, and/or **in that** identification means arranged in the signal transmitter (1) are provided.

5. Device for transmitting measured values according to one of Claims 1 to 4, **characterized in that** rating plate data for the pump (22), rating plate data for the drive motor (23), hydraulic characteristic curves and regulating and/or diagnostic algorithms are stored in the memory apparatus (17).

6. Device for transmitting measured values according to one of Claims 1 to 5, **characterized by** a memory apparatus (17) for the operating data and operating states determined during operation of the centrifugal pump arrangement (21).

7. Device for transmitting measured values according to Claim 6, **characterized in that** the memory apparatus (17) is designed to store propagation time values, numbers of centrifugal pump starts and load profile values for predefined different periods of time.

8. Device for transmitting measured values according to one of Claims 1 to 7, **characterized by** an additional output for stored data for the centrifugal pump arrangement.

9. Device for transmitting measured values according to one of Claims 1 to 8, **characterized by** a connection for connection to external devices (24) .

10. Device for transmitting measured values according to Claim 9, **characterized in that** the output for the standardized output signal (10) is used to connect external devices (24) by means of a data bus (25).

11. Device for transmitting measured values according to Claim 9 or 10, **characterized in that** the stored data for the centrifugal pump arrangement are available to the external devices (24) for automatic parameterization of the latter, for display and/or for further processing.

12. Method for transmitting measured values of a centrifugal pump arrangement using a device for transmitting measured values according to one of Claims 1 to 11, **characterized in that** the sensors (7, 8) are identified by identification means (13, 14, 15, 16), **in that** the evaluation unit (2) automatically processes the measured values from the respective sensors (7, 8) and displays measured values and/or calculated variables on the display (4), and **in that** the microcomputer (3) calculates, evaluates and stores operating data and operating states of the centrifugal pump arrangement (21) with the aid of the measured values and the stored data for the pump (22) and/or the drive motor (23).

13. Method according to Claim 12, **characterized in that** the display (4) displays measured values and/or calculated variables in a cyclically alternating manner.

14. Method according to Claim 12 or 13, **characterized in that** propagation time values, numbers of centrifugal pump starts and/or load profile values are determined and stored over predefined different periods of time.

15. Method according to one of Claims 12 to 14, **characterized in that** stored data are read out via an output.

16. Method according to one of Claims 12 to 15, **characterized in that** data are interchanged with external devices (24) with or without lines or manually using a mobile transmission element.

17. Method according to one of Claims 12 to 16, **characterized in that** the external devices (24) have access to the stored data for the centrifugal pump arrangement, are automatically parameterized using these data and/or use these data for display or further processing.

18. Method according to one of Claims 12 to 17, **characterized in that** automated data transmission is activated by setting up a connection to the device for transmitting measured values (1), by means of a reset or by means of trigger switches.

## Revendications

1. Dispositif de transmission de valeurs de mesure comportant un module de détection constitué de composants miniaturisés, disposé sur un système de pompe centrifuge muni d'une pompe et d'un moteur d'entraînement, et une unité d'évaluation, dans lequel le module de détection comporte des bornes destinées à des capteurs différents, le module de détection peut être relié à un ou plusieurs capteurs qui détectent des états de fonctionnement du système de pompe centrifuge muni d'une pompe et d'un moteur d'entraînement en tant que valeurs de mesure et dans lequel le module de détection comporte une borne d'alimentation en énergie et traite les valeurs de mesure, **caractérisé en ce que** le module de détection détermine les capteurs (7, 8) à l'aide de moyens d'identification, **en ce que** le module de détection est réalisé sous la forme d'un émetteur de signal (1) ayant un signal de sortie normalisé (10), **en ce que** l'unité d'évaluation (2) comporte un microcalculateur (3), est intégrée au module de détection et est réalisée de manière à comporter un afficheur (4) et **en ce que** l'unité d'évaluation (2) traite les valeurs de mesure et affiche des valeurs de mesure et/ou des grandeurs calculées sur l'afficheur (4) et **en ce que** l'émetteur de signal (1) comporte un dispositif de mémoire (17) contenant des données technologiques de la pompe (22) et/ou du moteur d'entraînement (23), dans lequel le microcalculateur (3) calcule et évalue des données de fonctionnement et des états de fonctionnement du système de pompe centrifuge (21) à l'aide des valeurs de mesure et des données stockées.

2. Dispositif de transmission de valeurs de mesure selon la revendication 1, **caractérisé en ce que** l'unité d'évaluation (2) affiche cycliquement de manière alternée sur l'afficheur (4) des valeurs de mesure et/ou des grandeurs calculées.

3. Dispositif de transmission de valeurs de mesure selon la revendication 1 ou 2, **caractérisé en ce que** l'émetteur de signal (1) comporte des bornes (5, 6) destinées à des capteurs (7, 8) de pression d'aspiration et/ou de pression finale, à un capteur de pression de différence entre pompes et/ou à des capteurs destinés à détecter d'autres grandeurs de mesure.

4. Dispositif de transmission de valeurs de mesure selon la revendication 1, 2 ou 3, **caractérisé en ce que** les capteurs (7, 8) peuvent être identifiés par l'émetteur de signal (1) au moyen de signaux d'identification propres (15, 16) et/ou de connecteurs codés et/ou **en ce qu'**il est prévu des moyens d'identification disposés dans l'émetteur de signal (1).

5. Dispositif de transmission de valeurs de mesure selon l'une quelconque des revendications 1 à 4, **caractérisé en ce que** des données de plaque signalétique de la pompe (22), des données de plaque signalétique du moteur d'entraînement (23), des courbes caractéristiques hydrauliques ainsi que des algorithmes de régulation et/ou de diagnostic sont stockés dans le dispositif de mémoire (17).

6. Dispositif de transmission de valeurs de mesure selon l'une quelconque des revendications 1 à 5, **caractérisé par** un dispositif de mémoire (17) destiné aux données de fonctionnement et aux états de fonctionnement déterminés pendant un fonctionnement du système de pompe centrifuge (21).

7. Dispositif de transmission de valeurs de mesure selon la revendication 6, **caractérisé en ce que** le dispositif de mémoire (17) est conçu pour le stockage de valeurs de temps de propagation, de nombres de démarrages de la pompe centrifuge et de valeurs collectives de charge pour différents intervalles de temps prédéterminés.

8. Dispositif de transmission de valeurs de mesure selon l'une quelconque des revendications 1 à 7, **caractérisé par** une sortie supplémentaire destinée à des données stockées du système de pompe centrifuge.

9. Dispositif de transmission de valeurs de mesure selon l'une quelconque des revendications 1 à 8, **caractérisé par** une borne permettant une connexion à des appareils externes (24).

10. Dispositif de transmission de valeurs de mesure selon la revendication 9, **caractérisé en ce que** la sortie destinée au signal de sortie normalisé (10) est utilisée pour le raccordement d'appareils externes (24) au moyen de bus de données (25).

11. Dispositif de transmission de valeurs de mesure selon la revendication 9 ou 10, **caractérisé en ce que** les données stockées du système de pompe centrifuge sont fournies aux appareils externes (24) pour leur paramétrage automatique, pour l'affichage et/ou pour un traitement supplémentaire.

12. Procédé de transmission de valeurs de mesure d'un système de pompe centrifuge par utilisation d'un dispositif de transmission de valeurs de mesure selon l'une quelconque des revendications 1 à 11, **caractérisé en ce que** les capteurs (7, 8) sont identifiés à l'aide de moyens d'identification (13, 14, 15, 16), **en ce que** l'unité d'évaluation (2) traite automatiquement les valeurs de mesure des capteurs respectifs (7, 8) et affiche des valeurs de mesure et/ou des grandeurs calculées sur l'afficheur (4) et **en ce que** le microcalculateur (3) calcule, évalue et stocke des données de fonctionnement et des états de fonctionnement du système de pompe centrifuge (21) à l'aide des valeurs de mesure et des données stockées de la pompe (22) et/ou du moteur d'entraînement (23).

13. Procédé selon la revendication 12, **caractérisé en ce que** l'afficheur (4) affiche cycliquement en alternance des valeurs de mesure et/ou des grandeurs calculées.

14. Procédé selon la revendication 12 ou 13, **caractérisé en ce que** des valeurs de temps de propagation, des nombres de démarrages de la pompe centrifuge et/ou des valeurs collectives de charge sont déterminées et stockées au cours de différents intervalles de temps prédéterminés.

15. Procédé selon l'une quelconque des revendications 12 à 14, **caractérisé en ce que** des données stockées sont lues par l'intermédiaire d'une sortie.

16. Procédé selon l'une quelconque des revendications 12 à 15, **caractérisé en ce qu'**un échange de données avec des appareils externes (24) est effectué avec des liaisons par lignes, sans liaisons par lignes ou manuellement au moyen d'un élément de transmission mobile.

17. Procédé selon l'une quelconque des revendications 12 à 16, **caractérisé en ce que** les appareils externes (24) ont accès aux données stockées du système de pompe centrifuge, sont automatiquement paramétrés avec ces données et/ou utilisent ces données pour l'affichage ou un traitement supplémentaire.

18. Procédé selon l'une quelconque des revendications 12 à 17, **caractérisé en ce qu'**une transmission automatisée de données est activée par établissement d'une liaison avec le dispositif de transmission de valeurs de mesure (1), par une réinitialisation ou par des commutateurs de déclenchement.
